# FASCICULE DE BREVET EUROPEEN

(11) **EP 3 551 905 B1**
(45) Date de publication et mention de la délivrance du brevet: **30.03.2022**
(21) Numéro de dépôt: 17821681.8
(22) Date de dépôt: 05.12.2017
(51) Int. Cl.: F16D 65/18, F16D 55/226, F16D 121/04, F16D 121/24, F16D 125/40

(54) **ENTRAINEUR DE PISTON D'ETRIER DE FREIN ELECTROMECANIQUE INTEGRANT UNE FACE ANTIFRICTION**
TREIBER FÜR ELEKTROMECHANISCHEN BREMSSATTELKOLBEN MIT EINER REIBUNGSFREIEN SEITE
DRIVER FOR ELECTROMECHANICAL BRAKE CALIPER PISTON, COMPRISING A NON-FRICTION FACE

(30) Priorité: 07.12.2016 FR 1662066
(43) Date de publication de la demande: 16.10.2019
(73) Titulaire: Hitachi Astemo France, 93700 Drancy (FR)
(72) Inventeur: BOURLON, Philippe, 77230 Dammartin en Goele (FR)
(74) Mandataire: Brevalex
(86) Numéro de dépôt international: PCT/FR2017/053393
(87) Numéro de publication internationale: WO 2018/104649

(56) Documents cités:
- CN-U- 203 161 909
- JP-A- 2014 101 960
- US-A- 4 036 330
- US-B2- 7 007 775

## Description

### DOMAINE TECHNIQUE

L'invention se rapporte à un organe d'entraînement d'un piston équipant un étrier de frein à disque à actionneur électromécanique.

### ÉTAT DE LA TECHNIQUE ANTÉRIEURE

Un frein à disque électromécanique comprend un étrier chevauchant un disque de freinage, cet étrier comportant un corps d'étrier qui porte deux plaquettes de part et d'autre du disque et qui est équipé d'un actionneur électromécanique pour presser ces plaquettes contre le disque lorsqu'il est activé, afin de générer un couple de freinage.

Le corps d'étrier comporte un logement cylindrique s'étendant entre l'actionneur et l'une des plaquettes, dans lequel coulisse un piston mobile ayant sa tête en appui sur cette plaquette. L'actionneur comporte un arbre de sortie accouplé à un entraîneur ou organe d'entraînement faisant partie d'une liaison de type hélicoïdale située dans le logement cylindrique et en partie dans le piston, pour être interposée entre l'actionneur et la tête du piston.

Lorsque l'actionneur est activé, il exerce un couple via son arbre de sortie, qui est transformé en effort presseur par un mécanisme à liaison hélicoïdale, pour que le piston presse la plaquette sur le disque. L'étrier est généralement monté flottant selon la direction axiale du disque, de sorte que l'effort presseur exercé par un seul piston suffit à presser les deux plaquettes opposées contre le disque.

Dans un tel système, la liaison hélicoïdale est irréversible : un effort exercé sur le piston ne se traduit pas par l'exercice d'un couple par la vis d'entraînement. Cette liaison comporte une douille dans laquelle l'entraîneur ou organe d'entraînement est vissé, logée dans le piston et liée à celui-ci par une liaison de type prismatique, c'est-à-dire permettant à la douille de coulisser longitudinalement dans le piston mais interdisant sa rotation par rapport à celui-ci. Le piston coulisse dans son logement tout en étant bloqué en rotation par rapport au corps d'étrier.

Lorsque l'actionneur est activé, ce qui correspond généralement à une commande de frein de parc, la douille en appui contre une face interne de la tête du piston pousse celui-ci vers le disque. De manière indépendante, une mise en pression hydraulique du logement du piston, correspondant généralement à une commande de frein de service, permet elle aussi de presser ce piston vers le disque.

L'entraîneur de la liaison hélicoïdale comporte une tête qui est en appui contre un fond du logement du corps d'étrier par l'intermédiaire d'une butée à bille ou à rouleaux. La douille s'écarte de cette tête lorsque l'entraîneur tourne dans un sens de serrage du frein, et elle s'en rapproche lorsqu'il tourne dans un sens de desserrage du frein.

Dans ce contexte, le document JP2014101960 décrit un étrier de frein intégrant une liaison rotule optimisant la coaxialité de l'entraîneur avec le logement cylindrique, et qui présente d'une façon générale une structure complexe nécessitant un nombre de composants élevé.

Le document CN 203 161 909 U montre un étrier de frein électromécanique avec un élément métallique portant un revêtement en teflon situé entre le fond du logement cylindrique et le mécanisme d'entraînement.

Le but de l'invention est d'apporter une solution permettant de réduire le coût de fabrication du mécanisme d'entraînement du piston d'un frein électromécanique.

### EXPOSÉ DE L'INVENTION

A cet effet, l'invention a pour objet un étrier de frein électromécanique d'après la revendication 1.

Avec cette solution, le coût de fabrication de l'étrier est réduit par suppression de sa butée à bille. Le dépôt d'un revêtement anti-friction directement sur la face d'appui de la tête de l'organe d'entraînement diminue le nombre de composants et permet d'appliquer le revêtement le plus adapté à l'environnement spécifique de fonctionnement de l'organe d'entraînement.

L'invention concerne également un étrier ainsi défini, dont le fond est une face d'une paroi du corps d'étrier fermant le logement de ce corps d'étrier, cette paroi comportant un trou central traversé par une extrémité de l'organe d'entraînement, le trou central et le fond étant pourvus l'un et l'autre d'un revêtement anti-friction.

L'invention concerne également un étrier ainsi défini, dans lequel le revêtement anti-friction est un revêtement de type fluoropolymère.

L'invention concerne également un frein à disque comprenant un étrier ainsi défini.

L'invention concerne également un procédé d'assemblage d'un étrier ainsi défini, comportant une étape d'introduction dans le logement du corps d'étrier d'un ensemble comportant le piston et son organe d'entraînement.

### BRÈVE DESCRIPTION DES DESSINS

La figure 1 est une vue du frein selon l'invention avec son étrier et son disque selon un plan de coupe s'étendant selon l'axe du disque ;
La figure 2 est une vue d'une portion du corps de l'étrier de frein selon l'invention.

### EXPOSÉ DÉTAILLÉ DE MODES DE RÉALISATION PARTICULIERS

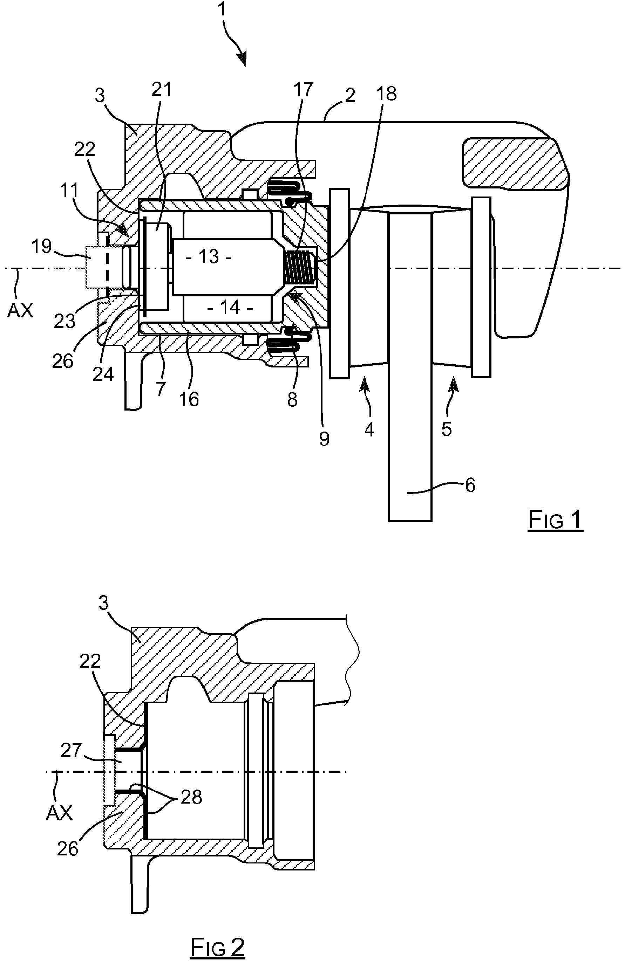

Le frein à disque électromécanique selon l'invention qui est représenté sur la figure 1 en y étant repéré par 1 comprend un étrier 2 comportant un corps d'étrier 3 portant deux plaquettes 4 et 5 enserrant un disque 6, ce corps d'étrier 3 étant équipé d'un actionneur électromécanique non représenté.

Le corps d'étrier comporte un logement cylindrique 7 s'étendant entre l'actionneur et l'une des plaquettes, dans lequel est logé un piston mobile 8 ayant sa tête en appui sur la plaquette 4, ce piston 8 étant mobile en translation selon une direction axiale AX et bloqué en rotation autour de l'axe AX par rapport au corps d'étrier 3. Ce corps d'étrier 3 est un élément monobloc, par exemple issu de fonderie.

Ce piston 8 est déplacé ou pressé contre la plaquette 4 par l'intermédiaire d'un mécanisme 9 à liaison hélicoïdale qui est accouplé à l'actionneur non représenté, le mécanisme de liaison hélicoïdale 9 étant logé principalement dans le piston 8.

Ce mécanisme à liaison hélicoïdale 9 comprend un entraîneur ou organe d'entraînement 11 vissé dans une douille 13 qui porte une couronne 14 de blocage en rotation de cette douille 13 par rapport au piston 8. Comme visible sur la figure 1, la douille 13 et la couronne 14 sont situées dans l'espace interne délimité par la jupe cylindrique 16 du piston 8.

L'entraîneur 11 comprend plus particulièrement un corps fileté 17 ayant une extrémité libre 18 et une extrémité d'accouplement 19 à l'actionneur non représenté, ainsi qu'une tête 21 située au voisinage de l'extrémité d'accouplement 19.

La tête 21 a une forme générale de plaque circulaire d'épaisseur significative ayant un diamètre externe inférieur au diamètre interne de la jupe 16. Cette tête 21 comporte une face d'appui 23 orientée du côté de l'extrémité d'accouplement 19, et par laquelle elle est en appui contre un fond plan 22 du logement cylindrique 7, par l'intermédiaire d'une rondelle d'appui 24.

Comme visible sur la figure 1, l'extrémité d'accouplement 19 traverse de manière étanche une paroi 26 du corps d'étrier 3 délimitant le fond 22, via un trou formé dans cette paroi 26, pour permettre l'accouplement de l'arbre de sortie de l'actionneur non représenté à cette extrémité 19 qui dépasse ainsi hors du corps d'étrier 3. En pratique, l'extrémité 19 comporte une empreinte de type à six pans creux dans laquelle s'engage une extrémité de l'arbre de sortie de l'actionneur qui est rapporté contre le corps d'étrier 3 sur la face externe de la paroi 26.

Le fond plan 22 correspond à la face interne de la paroi 26, et il présente une forme de disque délimité extérieurement par le logement cylindrique 7 guidant en translation le piston 8. La paroi 26 et le fond 22 correspondant à sa face interne sont délimités intérieurement, c'est-à-dire en leur milieu par le trou central traversé par l'extrémité 19.

Comme il ressort des figures 1 et 2, la paroi 26 est située du côté de l'actionneur électromécanique du frein, et son trou central est repéré par 27 sur la figure 2 dans laquelle il apparaît plus clairement.

Une rotation dans le sens de serrage de l'entraîneur 11, répondant à une commande de frein de parc, permet d'écarter la douille 13 de la tête 21 pour qu'elle presse le piston 8 contre la plaquette 4 afin de générer un couple de freinage. Inversement une rotation en sens de desserrage, répondant à une commande de relâchement du frein de parc, rapproche la douille 13 de la tête 21 pour réduire et annuler le couple de freinage.

Le logement 7 ainsi que le mécanisme 9 baignent par ailleurs dans du liquide hydraulique. Une augmentation de la pression de ce liquide, répondant à une commande d'actionnement du frein de service, presse ainsi le piston contre la plaquette 4 pour générer un couple de freinage. Inversement, une diminution de la pression hydraulique, répondant à une commande de relâchement du frein de service, réduit la pression exercée par le piston sur la plaquette 4 pour réduire voire annuler le couple de freinage.

La face d'appui 23 de la tête 21 de l'entraîneur 11 est pourvue d'un revêtement anti-friction, et la rondelle d'appui 24 est fabriquée en acier dur en ayant un état de surface approprié, c'est-à-dire présentant une faible rugosité, pour favoriser un glissement de la face d'appui 23 sur la rondelle d'appui 24 offrant une faible résistance, c'est-à-dire un de faibles frottements.

Complémentairement, et comme représenté schématiquement sur la figure 2, le revêtement anti-friction 28 est situé sur le fond 22 et/ou à la face interne du trou 27, pour assurer une reprise des efforts selon l'axe AX et une rotation de l'organe d'entraînement 19 induisant un couple résiduel minimal.

Autrement dit, la rondelle d'appui 24 étant fabriquée ou achetée séparément et rapportée dans le mécanisme, elle permet d'offrir une surface d'appui adéquate à la face d'appui 23 de l'entraîneur 11 sans devoir usiner ou traiter le fond 22 du logement 7 qui est complexe à traiter ou usiner puisque peu accessible. Comme il est principalement requis de cette rondelle qu'elle ait un état de surface approprié, c'est-à-dire qu'elle soit suffisamment lisse, son coût de fabrication ou d'achat reste faible.

Dans le cas où le fond 22 présente une planéité et un état de surface appropriés, la face d'appui 23 de la tête 21 de l'entraîneur est avantageusement en appui direct contre le fond 22. Ce mode de réalisation ne forme pas partie de l'invention.

Le revêtement anti-friction de la face d'appui 23 est avantageusement un revêtement composé de fluoropolymères, appliqué par exemple par pistolage électrostatique de micro-poudre de fluoropolymère sur la face d'appui brute de l'entraîneur 11, un tel procédé étant notamment décrit dans le brevet FR3013240.

En pratique, il est apparu qu'un revêtement de fluoropolymère présente à la fois de bonnes performances et une longévité appropriée lorsqu'il est sollicité tout en baignant dans le liquide hydraulique de la commande de freinage qui constitue à lui seul un environnement agressif.

L'invention permet de réduire le coût de fabrication du frein électromécanique en se dispensant du surcoût engendré par une butée à bille ou à rouleaux, ou bien du surcoût engendré par une rondelle anti-friction accolée à une rondelle d'appui pour remplacer une telle butée à bille.

En effet, bien que moins onéreuses que les butées à billes ou à rouleaux, les rondelles anti-friction connues ont malgré tout un coût significatif. Elles sont fabriquées à partir d'une tôle portant un revêtement en cuivre et un revêtement en téflon qui est en soi coûteuse à élaborer. Cette tôle est découpée pour former des rondelles ce qui engendre des pertes induisant un surcoût supplémentaire.

### Nomenclature

- 1: frein
- 2: étrier
- 3: corps d'étrier
- 4: plaquette
- 5: plaquette
- 6: disque
- 7: logement
- 8: piston
- 9: mécanisme
- 11: entraîneur
- 13: douille
- 14: couronne
- 16: jupe
- 17: corps fileté
- 18: extrémité libre
- 19: extrémité d'accouplement
- 21: tête
- 22: fond plan
- 23: face d'appui
- 24: rondelle d'appui
- 26: paroi
- 27: trou central
- 28: revêtement anti-friction

## Revendications

1. Etrier (2) de frein électromécanique (1) comprenant un corps d'étrier monobloc (3) comportant un logement (7) renfermant un piston (8) et un organe d'entraînement (11) d'un mécanisme (9) de déplacement de ce piston (8), cet organe d'entraînement (11) comprenant un corps fileté (17) et une tête (21) comprenant une face d'appui (23) contre un fond (22) du logement (7), **caractérisé en ce qu'** au moins la face d'appui (23) est pourvue d'un revêtement anti-friction, ledit étrier comprenant également une rondelle métallique (24) interposée entre la face d'appui (23) de la tête (21) de l'organe d'entraînement (11) et le fond (22) du logement (7).

2. Etrier selon la revendication 1, dont le fond (22) est une face d'une paroi (26) du corps d'étrier (3) fermant le logement (7) de ce corps d'étrier, cette paroi (26) comportant un trou central (27) traversé par une extrémité (19) de l'organe d'entraînement (11), le trou central (27) et le fond (22) étant pourvus l'un et l'autre d'un revêtement anti-friction.

3. Etrier selon la revendication 1 ou 2, dans lequel le revêtement anti-friction est un revêtement de type fluoropolymère.

4. Etrier selon l'une des revendications 1 à 3, dans lequel la rondelle métallique (24) présente une faible rugosité de sorte que le glissement entre le revêtement anti-friction sur la rondelle métallique (24) d'appui offre une faible résistance.

5. Etrier selon l'une des revendications 1 à 4, dans lequel la rondelle métallique (24) est en acier dur.

6. Frein à disque comprenant un étrier selon l'une des revendications 1 à 5.

7. Procédé d'assemblage d'un étrier de frein selon l'une des revendications 1 à 5, comportant une étape d'introduction dans le logement (7) du corps d'étrier (7) de la rondelle métallique (24), puis de l' ensemble comportant le piston (8) et son organe d'entraînement (11).

## Patentansprüche

1. Bremssattel (2) für eine elektromechanische Bremse (1), umfassend einen einstückigen Bremssattelkörper (3), der ein Gehäuse (7) aufweist, in dem ein Kolben (8) und ein Antriebsglied (11) eines Mechanismus (9) zum Bewegen dieses Kolbens (8) aufgenommen ist, wobei dieses Antriebsglied (11) einen Gewindekörper (17) und einen Kopf (21) umfasst, der eine Fläche (23) zur Anlage an einem Boden (22) des Gehäuses (7) umfasst, **dadurch gekennzeichnet, dass** mindestens die Anlagefläche (23) mit einer Gleitbeschichtung versehen ist, wobei der Bremssattel auch eine metallische Scheibe (24) umfasst, die zwischen der Anlagefläche (23) des Kopfs (21) des Antriebsglieds (11) und dem Boden (22) des Gehäuses (7) angeordnet ist.

2. Bremssattel nach Anspruch 1, wobei der Boden (22) eine Fläche einer Wand (26) des Bremssattelkörpers (3) ist, die das Gehäuse (7) dieses Bremssattelkörpers verschließt, wobei diese Wand (26) ein mittleres Loch (27) aufweist, durch das ein Ende (19) des Antriebsglieds (11) geht, wobei das mittlere Loch (27) und der Boden (22) jeweils mit einer Gleitbeschichtung versehen sind.

3. Bremssattel nach Anspruch 1 oder 2, wobei die Gleitbeschichtung eine Fluorpolymerbeschichtung ist.

4. Bremssattel nach einem der Ansprüche 1 bis 3, wobei die metallische Scheibe (24) eine schwache Rauhigkeit aufweist, so dass das Gleiten zwischen der Gleitbeschichtung auf der metallischen Stützscheibe (24) einen geringen Widerstand bietet.

5. Bremssattel nach einem der Ansprüche 1 bis 4, wobei die metallische Scheibe (24) aus Hartstahl ist.

6. Scheibenbremse, umfassend einen Bremssattel nach einem der Ansprüche 1 bis 5.

7. Verfahren zur Montage eines Bremssattels nach einem der Ansprüche 1 bis 5, aufweisend einen Schritt des Einführens der metallischen Scheibe (24) und dann der den Kolben (8) und sein Antriebsglied (11) aufweisenden Anordnung in das Gehäuse (7) des Bremssattelkörpers (7).

## Claims

1. Caliper (2) for an electromechanical brake (1) comprising a single-piece caliper body (3) comprising a housing (7) enclosing a piston (8) and a member (11) for driving a mechanism (9) for moving this piston (8), this drive member (11) comprising a threaded body (17) and a head (21) comprising a face (23) bearing against a bottom (22) of the housing (7), and **characterized in that** at least the bearing face (23) is provided with a non-friction coating, the caliper further comprising metal washer (24) interposed between the bearing face (23) of the head (21) of the drive member (11) and the bottom (22) of the housing (7).

2. Caliper according to claim 1, the bottom (22) of which is a face of a wall (26) of the caliper body (3) closing the housing (7) of this caliper body, this wall (26) comprising a central hole (27) through which one end (19) of the drive member (11) passes, the central hole (27) and the bottom (22) each being provided with a non-friction coating.

3. Caliper according to claim 1 or claim 2, wherein the non-friction coating is a coating of the fluoropolymer type.

4. Caliper according to any of claims 1 to 3, wherein the metal washer (24) has low roughness, in order to assist sliding of the bearing face on the metal washer (24) offering low resistance.

5. Caliper according to any of claims 1 to 4, wherein the metal washer (24) is manufactured from hard steel.

6. Disc brake comprising a caliper according to any of claims 1 to 5.

7. Method for assembling a brake caliper according to any of the preceding claims, comprising a step of introducing, into the housing (7) of the caliper body (7), a metal washer (24) and then an assembly comprising the piston (8) and its drive member (11).
